# EUROPEAN PATENT SPECIFICATION

(11) **EP 0 865 362 B1**
(45) Date of publication and mention of the grant of the patent: **16.07.2003**
(21) Application number: 97941164.2
(22) Date of filing: 05.09.1997
(51) Int. Cl.: B32B 31/00, B32B 31/20, B41F 15/36

(54) **FOIL APPLICATOR AND METHOD FOR APPLYING A FOIL**
VORRICHTUNG UND VERFAHREN ZUM ANBRINGEN VON FOLIEN
APPLICATEUR DE FEUILLE ET METHODE POUR APPLIQUER UNE FEUILLE

(30) Priority: 05.09.1996 US 708736
(43) Date of publication of application: 23.09.1998
(73) Proprietor: WEA Manufacturing, Inc., Olyphant, PA 18447 (US)
(72) Inventor: ZAYKOSKI, Ronald, Nanticoke, PA 18634 (US); PAVLOVIC, Richard, Scranton, PA 18510 (US)
(74) Representative: Godwin, Edgar James
(86) International application number: IB9701227
(87) International publication number: WO98012050

(56) References cited:
- US-A- 5 158 016
- US-A- 5 456 169
- US-A- 5 543 001

## Description

This invention relates to processes for the mass production of data recording compact discs. More particularly it relates to screen printing on a surface of such discs.

Compact discs are record carriers for digital or analog information, for example audio and/or video information, which have the form of a flat disc-shaped plastic surface on which a data modulated optical structure is provided in accordance with the information. The data is formed as pits of varying length present in the surface and arranged in a spiral path. The pits have nanometer dimensions and are formed by injection molding against a mold having corresponding raised regions. The data is read through one side of the disc which is transparent to laser light. The other side of the disc is coated with a screen printed label identifying the disc and containing design and logo information. These screen printed labels may be quite elaborate and employ several different colors formed by several printing stages.

The process of screen printing employs a screen (also referred to as a mesh) which is pressed against the surface of the disc. Ink is applied to the surface of the disc through the screen by a squeegee. The screen used for screen printing compact discs is subjected to extreme wear along the perimeter of the disc. The wear is a result of the squeegee climbing from the disc holding fixture onto the printable surface. To lengthen the life cycle of the screen, an aluminum foil tape is applied along the perimeter of the disc. The foil tape is manufactured in 254 mm (ten inch) squares with a center hole cut out. The center hole diameter equals 118 mm for some and 112 mm for others depending upon graphics.

The foil is manually applied to the screen frame by positioning the "foil hole" around the image area. Just as with any process involving manual application, the foil location can never be consistent. More specifically, if the foil is off center in any direction, to any degree, the result will be premature screen wear caused by the edge of the disc.

In order to overcome these problems, the present invention provides a method for attaching a foil to a screen, as set forth in claim 1, a method for producting compact discs, as set forth in claim 3, and an alignment applicator as set forth in claim 4.

The foil applicator of the present invention is a device for centering the foil in the screen frame. This device and its method of use ensures that the foil will be located precisely in the center of the screen frame each time. This prolongs screen life and establishes a quality checkpoint for image location. Previous to the foil applicator, all foil was applied manually. The advantages of locating the foil in the exact position with each application are the elimination of variation, having a quality check point of image location, fewer instances of the compact disc being pulled from its holding fixture by a folded foil edge, extended screen life, the elimination of foil wrinkles that can cause smears, fewer instances of edge leak and faster printer setup time. In a mass production system for the manufacture of compact discs these advantages are significant in the reduction of the cost of the disc. In general, the productivity of compact disc printing becomes more efficient and cost effective.

### Brief Description Of The Drawings

Figure 1 is a schematic representation of a carousel for screen printing of compact discs.
Figure 2 is a top view of a printing station for screen printing of compact discs.
Figure 3 is a top view of the printable surface of a compact disc.
Figure 4 is a perspective drawing of a foil applicator.
Figure 5 is an exploded drawing of the components of a foil applicator.

### Detailed Description Of A Preferred Embodiment

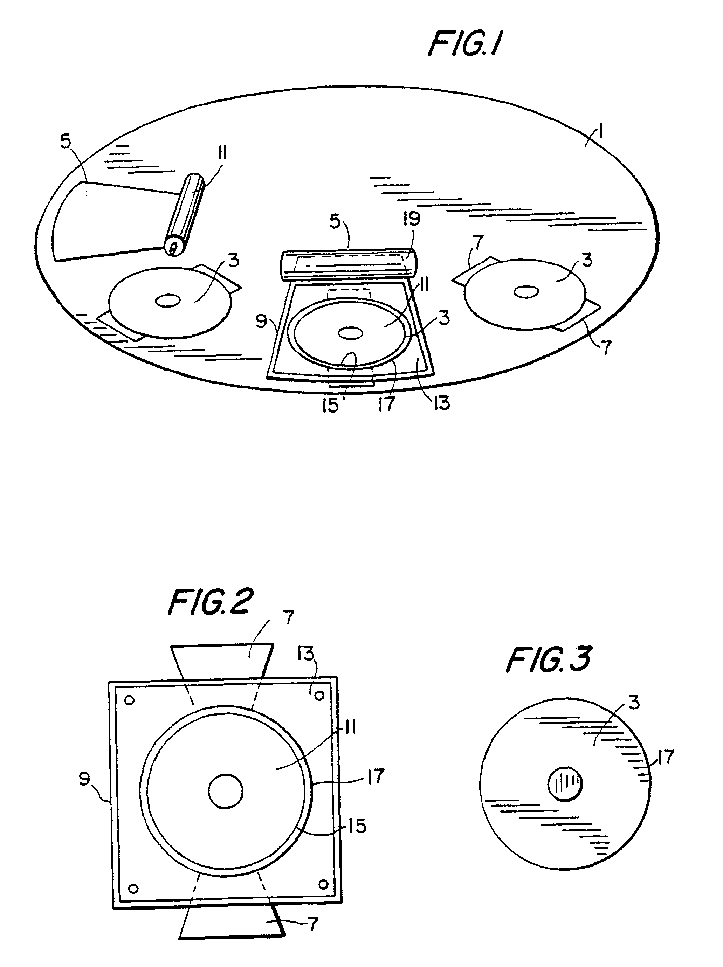

Figure 1 is a schematic diagram of a carousel 1 onto which compact discs 3 are placed by a robot arm (not shown). The discs are held in place by a holding fixture 7, which may be a chuck of some type, and carried by the rotation of the carousel to a printing station 5. The carousel pauses for a time long enough to complete a screen printing of the disc. The carousel then continues to rotate bringing another disc to the printing station 5, and rotating the disc just printed to another printing station where a second printing, typically of another color in a multicolor printing process may occur. The movement of the discs is controlled so that sufficient time is allowed for drying between printing stages, which may entail a disc being carried by the carousel for more than a complete rotation before being removed by a robotic arm.

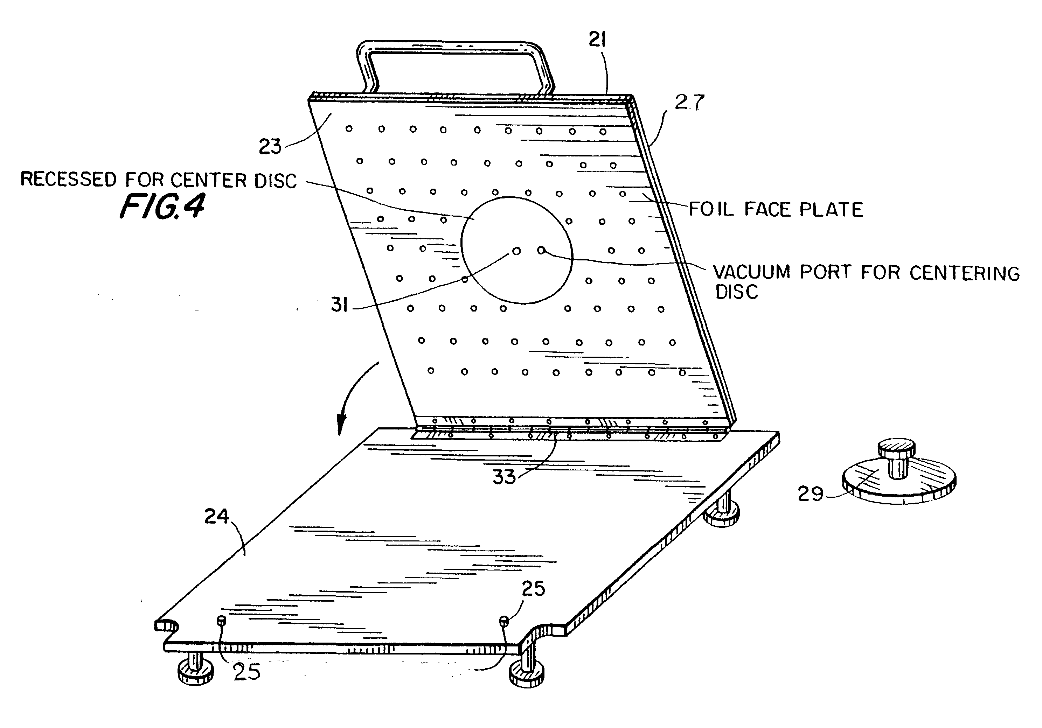

As shown in Fig. 2, at the printing station the disc is overlayed by a screen frame 9 that supports the screen 11 that rests on the printable surface of the disc. The screen 11 is supported by a foil tape 13 that has a circular opening 15 which has a smaller radius than that of the edge 17 of the disc. The edge of the disc is labeled more clearly in Fig. 3. The ink is then applied by the ink applicator means 19, which may be a squeegee and is depicted as a roller in the schematic representation. The applicator means is passed radially with respect to the carousel and rises from the level of the holding fixture to that of the printable surface, passing over an edge of the disc when doing so and subjecting the foil surface to wear.

An aspect of the present invention is the application of the foil tape 13 to the screen by means of an applicator 21.

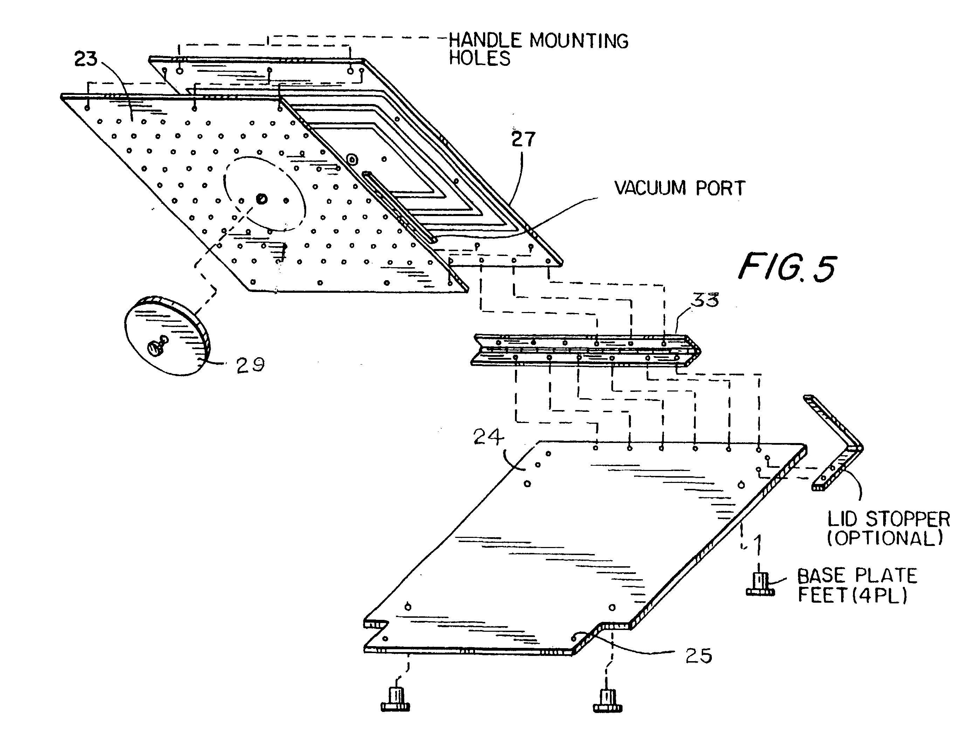

Preparing the foil covered screen is begun by raising the applicator lid 23 to its upright position and installing the screen frame. The screen frame sets on the alignment pins 25 of the base 24 with the emulsion side up. The lid, as shown in Fig. 5 has perforations that provide opening to a vacuum distribution plate 27 which allows planar surfaces to be temporarily held to the lid. The applicator vacuum is then switched on via a foot switch.

The proper hole diameter of the foil is chosen, typically 118 mm or 112 mm. A centering disc 29 is placed in position on a center disc alignment pin 31 and the foil with the adhesive side facing out is rotated until it is squared up along the edge of applicator. At this point, the applicator vacuum holds the foil in position. Once the vacuum has been established, it is possible to remove the centering disc without concern of foil movement.

The applicator lid is then lowered onto the screen. This will exert an equal amount of pressure across the surface area of the screen to achieve foil to screen adhesion. Next, the vacuum is shut off by releasing the foot switch. The applicator lid can now be raised back to its upright position. Lastly, the foil should be rolled, i.e. compressed by passing a roller over it, to insure a permanent bond.

The foil applicator provides a vehicle in which foil tape is positioned precisely in the center of a screen frame with repeatability. Such a task is achieved with an applicator lid that has vacuum porting for the foil and a precision alignment hole for the centering disc. The applicator hinges 33 connect the lid 23 to the base 24 and provide a positive screen frame location. The foil is aligned on the applicator by using the centering disc, then lowered onto the base. The center points of the applicator and the base meet with an accuracy of plus or minus 50µm (two thousandths of an inch).

While there have been shown and described and pointed out the fundamental novel features of the preferred embodiment of the invention, it will be understood that various omissions and substitutions and changes in the form and details of the device illustrated and in its operation may be made by those skilled in the art, consistent with the invention, which is specified in the following claims.

## Claims

1. A method for attaching an adhesive sided foil (13) having a circular opening therein to a scree (11) in an alignment applicator having a base (24) hinged to a vacuum ported lid (23) for use in assembly line screen printing of compact discs, comprising
installing and aligning the screen (11) on the base (24),
placing a centering disc (29) in position on an center disc alignment means attached to said lid (23),
placing the foil (13) with the adhesive side facing out over said centering disc (29) and rotating said foil until it is squared up along an edge of said lid,
engaging a vacuum means to provide vacuum to said vacuum ported lid (23) to hold the foil (13) against said lid (23),
removing the centering disc (29) and lowering applicator lid (23) onto the screen (11), wherein a uniform pressure is exerted across the surface area of the screen (11) to achieve foil to screen adhesion,
releasing the vacuum and raising the applicator lid (23).

2. The method for attaching an adhesive sided foil of claim 1 followed by the additional step of rolling the foil to insure a permanent bond.

3. A method for producing compact discs printed on one surface, comprising the steps of preparing a foil adhered screen according to the method of claim 1 or 2; placing said discs (3) on a carousel (1); and advancing by rotation of said carousel (1) the disc (3) to a screen printing station (5) having said foil adhered screen.

4. An alignment applicator for adhering a foil tape (13) having a center opening to a screen (11) for screen printing of compact discs comprising
a centering disc (29),
an applicator lid (23) attached by a hinge (33) to a base (24), said base having alignment pins (25) thereon for engaging corresponding holes in a screen frame,
said lid (23) having perforations that provide opening to a vacuum distribution plate (27), and a center disc alignment means for engaging corresponding engaging means in a center disc (29).

## Patentansprüche

1. Verfahren zum Anbringen einer Folie (13) mit einer Klebeseite, die eine kreisförmige Öffnung darin aufweist, an einem Sieb (11), in einem Auszitchtungsapplikator, der eine Basis (24) aufweist, die an einem Deckel (23) mit Vakuumanschluss schwenkbar angebracht ist, zur Verwendung bei einem Fließband-Siebdruck von Kompaktdisks, umfassend die folgenden Schritte:
Installieren und Ausrichten des Siebs (11) auf der Basis (24);
Platzieren einer Zentrierungsdisk (29) an einer Position auf einer Zentrumsdisk-Ausrichtungseinrichtung, die an dem Deckel (23) angebracht ist;
Platzieren der Folie (13) mit der Klebeseite über die Zentrierungsdisk (29) heraus gerichtet, und Drehen der Folie bis sie entlang einer Kante des Deckels quadratisch ausgerichtet ist,
Einrücken einer Vakuumeinrichtung, um ein Vakuum an dem Deckel (23) mit Vakuumanschluss bereit zu stellen, um die Folie (13) gegen den Deckel (23) zu halten,
Entfernen der Zentrierungsdisk (29) und Absenken des Applikatordeckels (23) auf das Sieb (11) hin, wobei ein gleichförmiger Druck über die Oberfläche des Siebs (11) ausgeübt wird, um eine Folie-an-Sieb-Klebung zu erreichen, und
Lösen des Vakuums und Anheben des Applikatordeckels (23).

2. Verfabren zum Anbringen einer Folie mit einer Klebeseite nach Anspruch 1, gefolgt durch den zusätzlichen Schritt, bei dem die Folie gerollt wird, um eine permanente Bindung sicher zu stellen.

3. Verfahren zum Produzieren von Kompaktdisks, die auf einer Oberfläche bedruckt sind, umfassend die Schritte zum Erstellen eines Siebs mit einer angeklebten Folie nach dem Verfahren des Anspruchs 1 oder 2; Platzieren der Disks (13) auf einem Karussell (1); und Vorrücken, durch Drehen des Karussells (1), der Disk (3) an eine Siebdruckstation (5), die das Sieb mit der angeklebten Folie aufweist.

4. Ausrichtungsapplikator zum Ankleben eines Folienbands (13) mit einer Zentrumsöffnung an einem Sieb (11) für einen Siebdruck von Kompaktdisks, umfassend:
eine Zentrierungsdisk (29);
einen Applikatordeckel (23), der über ein Gelenk (33) an einer Basis (24) angebracht ist, wobei die Basis Ausrichtungsstifte (25) darauf für einen Eingriff in entsprechende Löcher in einem Siebrahmen aufweist; und
wobei der Deckel (23) Perforationen, die eine Öffnung zu einer Vakuumverteilungsplatte (27) bereitstellen, und eine Zentrierungsdisk-Ausrichtungseinrichtung zum Eingreifen in eine jeweilige Eingriffseinrichtung in der Zentrierungsdisk (29) aufweist.

## Revendications

1. Procédé pour fixer une feuille (13) pourvue d'un côté adhésif et d'une ouverture circulaire sur un écran (11) dans un applicateur d'alignement comprenant une base (24) articulée sur un couvercle (23) pourvu d'orifices d'aspiration destiné à être utilisé dans la sérigraphie à la chaîne de disques compacts, comprenant les étapes qui consistent à :
installer et aligner l'écran (11) sur la base (24),
positionner un disque de centrage (29) sur un moyen d'alignement de disque de centrage fixé audit couvercle (23),
placer la feuille (13) avec le côté adhésif tourné à l'extérieur sur ledit disque de centrage (29) et faire tourner ladite feuille jusqu'à ce qu'elle coïncide avec un bord dudit couvercle,
faire intervenir ua moyen de vide pour fournir du vide audit couvercle (23) pourvu d'orifices d'aspiration afin de maintenir la feuille (13) contre ledit couvercle (23),
retirer le disque de centrage (29) et abaisser le couvercle (23) de l'applicateur sur l'écran (11), dans lequel une pression uniforme est exercée en travers de l'aire de surface de l'écran (11) afin d'obtenir l'adhésion de la feuille sur l'écran,
faire cesser l'application de vide et relever le couvercle (23) de l'applicateur.

2. Procédé pour fixer une feuille pourvue d'un côté adhésif selon la revendication 1, suivi par l'étape supplémentaire consistant à laminer la feuille afin d'assurer un lien permanent.

3. Procédé pour produire des disques compacts imprimés sur une face, comprenant les étapes qui consistent à préparer un écran sur lequel adhère une feuille selon le procédé de la revendication 1 ou 2 ; placer lesdits disques (3) sur un carrousel (1) ; et faire avancer, par la rotation dudit carrousel (1), le disque (3) vers une station de sérigraphie (5) qui comprend ledit écran sur lequel adhère la feuille.

4. Applicateur d'alignement servant à faire adhérer une bande d'une feuille (13) pourvue d'une ouverture centrale sur un écran (11) en vue de la sérigraphie de disques compacts, comprenant :
un disque de centrage (29),
un couvercle d'applicateur (23) relié à une base (24) par une charnière (33), ladite base étant pourvue de goujons d'alignement (25) destinés à s'engager dans des trous correspondants dans un cadre d'écran,
ledit couvercle (23) étant pourvu de perforations qui fournissent une ouverture vers une plaque de distribution de vide (27) et d'un moyen d'alignement de disque de centrage servant à l'engagement d'un moyen d'engagement correspondant dans un disque de centrage (29).
